# EUROPEAN PATENT APPLICATION

(11) **EP 4 749 290 A1**
(43) Date of publication of application: **27.05.2026**
(21) Application number: 24842822.9
(22) Date of filing: 23.05.2024
(51) Int. Cl.: G01N 35/00

(54) **AUTOMATED ANALYSIS DEVICE AND PHOTOMETER TEMPERATURE ADJUSTMENT METHOD**

(30) Priority: 14.07.2023 JP 2023116248
(71) Applicant: HITACHI HIGH-TECH CORPORATION, Tokyo 105-6409 (JP)
(72) Inventor: HORIKAWA, Hiroshi, Tokyo 105-6409 (JP)
(74) Representative: MERH-IP Matias Erny Reichl Hoffmann Patentanwälte PartG mbB
(86) International application number: PCT/JP2024/019121
(87) International publication number: WO 2025/018026

(57) **Abstract**

There is provided an automatic analysis apparatus including an analysis module configured to perform an analysis operation of a specimen, and a control device configured to control the analysis module. The analysis module includes a light source configured to emit light, a photometer configured to measure the light from the light source, which has passed through a reaction solution obtained by mixing the specimen with a reagent, a photometer temperature sensor configured to measure temperature of the photometer, an environmental temperature sensor installed in a housing of the analysis module and configured to measure an environmental temperature outside the housing, and a heater configured to heat the photometer. The control device is configured to calculate, based on a correlation between a stable temperature of the photometer and the environmental temperature, the stable temperature of the photometer from the environmental temperature measured by the environmental temperature sensor, and to control the heater only for a predetermined period of time using the stable temperature as a target value of the photometer temperature measured by the photometer temperature sensor.

## Description

### Technical Field

The present invention relates to an automatic analysis apparatus and a method of adjusting the temperature of a photometer.

### Background Art

In an automatic analysis apparatus that analyzes a specimen such as blood, a light source is one of the important components that determine analysis performance. Light emitted from the light source passes through a reaction solution obtained by mixing a reagent with a specimen, is dispersed into a specific number of wavelengths by a spectroscope, and is measured by a photometer. In this manner, since a target component is analyzed by photometry, it is important to ensure stability of the amount of light received by the photometer in the automatic analysis apparatus to ensure analysis accuracy.

It is known that an optical system of the photometer of the automatic analysis apparatus is affected by the temperature around the automatic analysis apparatus and the temperature of the photometer. When the automatic analysis apparatus is started from the shut-down state, heat is generated from components of the automatic analysis apparatus such that the temperature of an internal space of a housing of the automatic analysis apparatus, which covers the components, fluctuates. Accordingly, it is important to stabilize the temperature of the photometer in the early stage so as to prevent the above-mentioned fluctuation in temperature conditions from affecting the photometry.

Patent Literature 1 discloses a method of performing control such that the temperature of the photometer becomes a constant predetermined temperature set in advance by a user by feedback-controlling a heater based on the measurement temperature of the photometer. Patent Literature 2 discloses a method of storing, as a predetermined temperature, the temperature when an optical axis is stable in a spectroscopic chamber and heating the photometer such that the temperature of the photometer rises to the predetermined temperature.

### Citation List

### Patent Literature

PTL 1: JP2014-48176A
PTL 2: JP5825349B

### Summary of Invention

### Technical Problem

In the technology disclosed in Patent Literatures 1 and 2, even after an automatic analysis apparatus is started and then transitions to an operation state in which photometry is repeatedly performed, the temperature of a photometer is continuously controlled by a heater in order to maintain the temperature of the photometer during the photometry at a predetermined temperature. However, the temperature of the photometer, which naturally converges as the operation time of the automatic analysis apparatus has elapsed, (hereinafter referred to as a stable temperature) varies depending on the temperature around the automatic analysis apparatus, that is, the room temperature of a room in which the automatic analysis apparatus is installed (hereinafter referred to as an environmental temperature). The stable temperature also varies depending on the length of stop time during which the automatic analysis apparatus is continuously stopped before being started.

In the technology disclosed in Patent Literatures 1 and 2, when a difference between the predetermined temperature and the stable temperature is large, the heater is repeatedly driven continuously or intermittently in order to control the temperature of the photometer to a predetermined temperature different from the stable temperature of the photometer of the automatic analysis apparatus, leading to an increase in power consumption. In addition, driving the heater to heat the photometer during photometry may also cause optical noise. In addition, since the environmental temperature fluctuates, it is difficult to stabilize the temperature of the photometer at a predetermined temperature.

An object of the present invention is to provide an automatic analysis apparatus and a method of adjusting the temperature of a photometer capable of automatically controlling the temperature of the photometer to a stable temperature in accordance with a fluctuating environmental temperature.

### Solution to Problem

In order to achieve the above-described object, the present invention provides an automatic analysis apparatus including an analysis module configured to perform an analysis operation of a specimen, and a control device configured to control the analysis module. The analysis module includes a light source configured to emit light, a photometer configured to measure the light from the light source, which has passed through a reaction solution obtained by mixing the specimen with a reagent, a photometer temperature sensor configured to measure temperature of the photometer, an environmental temperature sensor installed in a housing of the analysis module and configured to measure an environmental temperature outside the housing, and a heater configured to heat the photometer. The control device is configured to calculate, based on a correlation between a stable temperature of the photometer and the environmental temperature, the stable temperature of the photometer from the environmental temperature measured by the environmental temperature sensor, and to control the heater only for a predetermined period of time using the stable temperature as a target value of the photometer temperature measured by the photometer temperature sensor.

### Advantageous Effects of Invention

According to the present invention, the temperature of a photometer can be automatically controlled to a stable temperature in accordance with a fluctuating environmental temperature.

### Brief Description of Drawings

[Fig. 1] Fig. 1 is a schematic diagram illustrating an overall configuration of an automatic analysis apparatus according to an embodiment of the present invention.
[Fig. 2] Fig. 2 is a schematic diagram illustrating an optical system of the automatic analysis apparatus according to the embodiment of the invention and peripheral devices thereof.
[Fig. 3] Fig. 3 is a schematic diagram illustrating an example of a layout of an environmental temperature sensor of the automatic analysis apparatus according to the embodiment of the invention.
[Fig. 4] Fig. 4 is a block diagram illustrating an overview of a temperature adjustment function of a photometer of a control device provided in the automatic analysis apparatus according to the embodiment of the invention.
[Fig. 5] Fig. 5 is a timing chart related to temperature adjustment of the photometer according to the embodiment of the invention.
[Fig. 6] Fig. 6 is a flowchart illustrating a temperature adjustment procedure of the photometer by the control device provided in the automatic analysis apparatus according to the embodiment of the invention.
[Fig. 7] Fig. 7 is a diagram illustrating an example of a correlation between a stable temperature and an environmental temperature that are used to control the temperature adjustment of the photometer of the automatic analysis apparatus according to the embodiment of the invention.
[Fig. 8] Fig. 8 is a diagram illustrating the effect of the temperature adjustment function of the photometer of the automatic analysis apparatus according to the embodiment of the invention.

### Description of Embodiments

Hereinafter, embodiments of the present invention will be described with reference to the accompanying drawings.

### -Automatic Analysis Apparatus-

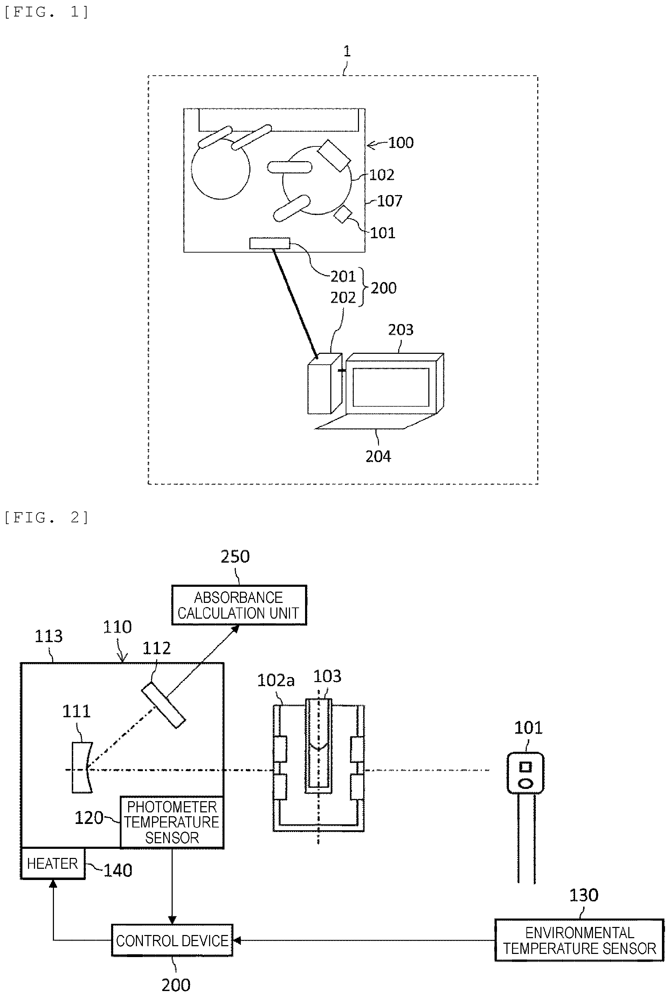

Fig. 1 is a schematic diagram illustrating an overall configuration of an automatic analysis apparatus according to an embodiment of the invention. An automatic analysis apparatus 1 illustrated in Fig. 1 is configured to include an analysis module 100 and a control device 200.

The analysis module 100 serves as a mechanical unit that performs an analysis operation of a specimen and is provided with various devices to perform the analysis operation. A light source 101 that emits light is one of the devices provided in the analysis module 100 and projects light onto a reaction container 103 (Fig. 2) containing therein a reaction solution obtained by mixing a specimen of a patient, such as blood or urine, with a reagent. The light source 101 is formed by using, for example, an LED element. There is no limit to the number of LED elements forming the light source 101, and the light source 101 can be configured to include, for example, a plurality of LED elements having different central wavelengths. When the plurality of LED elements are used for the light source 101, the amount of supply current is set individually for each of the LED elements.

The control device 200 is a computer that controls the analysis module 100 and includes an arithmetic control device such as a CPU and memories such as a RAM and a ROM. In the present embodiment, the control device 200 is configured to include a control device 201 mounted on the analysis module 100 and a control device 202 that communicates with the control device 202. In addition to a monitor 203, an input device 204 such as a keyboard or a mouse is connected to the control device 202. The monitor 203 can display processing and measurement results performed by the automatic analysis apparatus 1. In addition, through the operation of the input device 204, the conditions of the analysis operation performed by the automatic analysis apparatus 1 can be input.

For example, the control device 200 outputs an operation instruction from the control device 202 to the control device 201 based on the input from the input device 204. In accordance with the operation instruction, the control device 201 controls various devices forming the analysis module 100, the analysis operation is performed in the analysis module 100, and measurement data is calculated. The measurement data calculated by the analysis module 100 is transmitted to the control device 202 via the control device 201 and is displayed on the monitor 203.

However, the division of functions between the control devices 201 and 202 can be changed in design. Further, three or more control devices can be configured to be communicatively connected to each other, or a single control device can be used to integrate the functions. Additionally, the control device 200 can also include a server.

### -Photometer-

Fig. 2 is a schematic diagram of an optical system of the automatic analysis apparatus 1 illustrated in Fig. 1 and the peripheral devices thereof. The analysis module 100 is provided with a photometer 110, an absorbance calculation unit 250, a photometer temperature sensor 120, an environmental temperature sensor 130, and a heater 140.

The photometer 110 is an instrument that measures light from the light source 101, which has passed through a reaction solution obtained by mixing a specimen of a patient, such as blood or urine, with a reagent. The photometer 110 includes, for example, a spectroscopic element 111 such as a diffraction grating, a light-receiving element 112 such as a photoelectric converter, and a spectroscopic chamber 113 surrounding the spectroscopic element 111 and the light-receiving element 112. During operation of the analysis module 100, light is emitted from the light source 101 toward the photometer 110. For example, the light source 101 is disposed in a radially outer area of a doughnut-shaped reaction tank 102a containing reaction tank water (constant temperature medium), the photometer 110 is disposed in a radially inner area of the doughnut-shaped reaction tank 102a, and a reaction tank 205 is interposed between the light source 101 and the photometer 110. The reaction container 103 of a rotating reaction disc 102 (Fig. 1) moves through the reaction tank water of the doughnut-shaped reaction tank 205. The reaction container 103 contains a reaction solution obtained by mixing a specimen with a reagent, and light emitted from the light source 101 passes through the reaction solution and enters the photometer 110.

In the reaction solution inside the reaction container 103, a measurement item component of the specimen reacts with the reagent, and a substance to be measured is produced or consumed in proportion to a concentration of the measurement item component. Among the light emitted to the reaction solution, light having a wavelength in an absorption range corresponding to the substance to be measured is absorbed by the substance to be measured. Then, light that has not been absorbed by the substance to be measured and has passed through the reaction solution is incident on the spectroscopic element 111, which is a concave-shaped diffraction grating of the photometer 110. The light that has been incident on the spectroscopic element 111 is split into each wavelength by the spectroscopic element 111 and is incident on the light-receiving element 112. The light-receiving element 112 converts the received light into an electrical signal and outputs the electrical signal having intensity corresponding to the light receiving amount to the absorbance calculation unit 250.

In the absorbance calculation unit 250, absorbance is calculated based on the electrical signal input from the light-receiving element 112, and the calculated absorbance is output to the control device 200 (the control device 201 in the present embodiment). In the control device 200, colorimetric analysis is performed based on the absorbance input from the absorbance calculation unit 250. At this time, a memory of the control device 200 stores, as cell blank values, data of cell blank measurement in which cell blank water is aliquoted and absorbance at each wavelength from 340 to 800 nm is measured for all reaction containers 103 currently installed on the reaction disc 102. When performing colorimetric analysis, the control device 200 compares the cell blank value with absorbance of a reaction solution to be analyzed to correct the absorbance, calculates the corrected absorbance as measurement data, and outputs the measurement data to, for example, a user interface (such as a screen displayed on the monitor 203).

The photometer temperature sensor 120 is a thermometer that measures the temperature of the photometer 110. In the present embodiment, the photometer temperature sensor 120 is installed inside the box-shaped spectroscopic chamber 113, for example on the inner wall of the spectroscopic chamber 113. The temperature of the photometer 110, measured by the photometer temperature sensor 120, is output to the control device 200.

The environmental temperature sensor 130 is a thermometer installed inside a housing 107 of the analysis module 100 and measures the environmental temperature outside the housing 107, that is, the room temperature of a room in which the analysis module 100 is installed. The environmental temperature measured by the environmental temperature sensor 130 is output to the control device 200, and the control device 200 calculates a stable temperature of the photometer 110 based on the environmental temperature measured by the environmental temperature sensor 130.

The heater 140 is installed in the spectroscopic chamber 113 and heats the entire photometer 110, including the inside of the spectroscopic chamber 113, for example by heating the wall surface of the spectroscopic chamber 113. The control device 200 controls the heater 140 such that the stable temperature calculated based on the environmental temperature becomes a target temperature, that is, the temperature of the photometer 110, frequently measured by the photometer temperature sensor 120 thereafter, becomes the stable temperature.

### -Environmental Temperature Sensor-

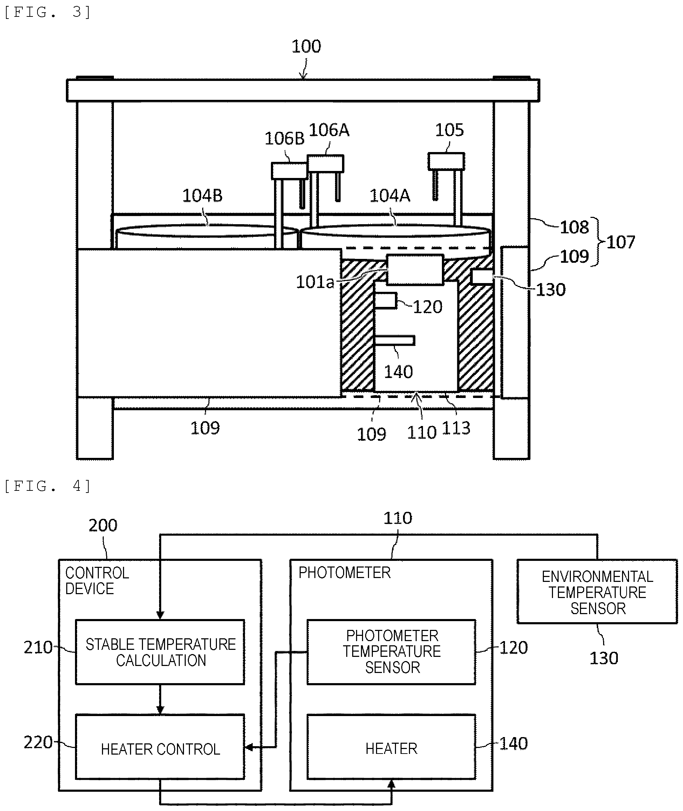

Fig. 3 is a schematic diagram illustrating an example of a layout of the environmental temperature sensor 130.

The housing 107 forming the outer shell of the analysis module 100 includes a frame including a plurality of (for example, four) posts 108, and an exterior cover 109 that forms the outer wall of the analysis module 100 and is mounted on the frame so as to close a gap between the frames. The post 108 is a metallic support for the housing 107. The exterior cover 109 is a plate-shaped component made of metal or resin and formed to cover a plurality of the components of the automatic analysis apparatus 1. Both the post 108 and the exterior cover 109 forming the housing 107 are in contact with the atmosphere outside the automatic analysis apparatus 1 and are also in contact with the atmosphere inside the housing 107.

In the configuration illustrated in Fig. 3, reagent cooling units 104A and 104B that cool and store a reagent to be mixed with a specimen, a specimen aliquoting mechanism 105 that aliquots the specimen into the reaction container 103, and reagent aliquoting mechanisms 106A and 106B that aliquot the reagent into the reaction container 103 are disposed inside the housing 107. The reagent cooling units 104A and 104B keep the reagent cool by circulating coolant cooled by a cooling unit. Therefore, in a section inside the housing 107, coolant flows into the section from coolant flow paths in the reagent cooling units 104A and 104B and the cooling units that store the reagent. The specimen aliquoting mechanism 105 and the reagent aliquoting mechanisms 106A and 106B are operated by stepping motors. Since the stepping motor stands by in an excited state, the stepping motor always generates heat while the automatic analysis apparatus 1 is in operation, and the generated heat flows from the stepping motor to the surrounding space inside the housing 107. Further, since the exterior cover 109 is provided, the temperature of the atmosphere inside the housing 107 is isolated from the atmosphere outside the automatic analysis apparatus 1, and the above-mentioned cold air and heat are mixed to create a unique temperature environment. A lamp holder 101a is a component that stores the light source 101 and is installed on the photometer 110. The reaction tank water circulating through the reaction tank 205 also circulates inside the lamp holder 101a.

When the automatic analysis apparatus 1 is continuously operated, the temperature of the photometer 110 installed inside the housing 107 converges to the atmospheric temperature inside the housing 107, which shows complex behavior due to the influence of cold air from coolant, heat generated by an operating component such as a stepping motor, and the like, and further the influence of the environmental temperature, and then reaches a stable temperature. Therefore, the stable temperature of the photometer 110 tends to be higher than the environmental temperature and varies from time to time depending on conditions such as the environmental temperature and a base temperature of the photometer 110. The base temperature of the photometer 110 varies depending on the temperature inside the housing 107 when the automatic analysis apparatus 1 is started. That is, the stable temperature also varies depending on the time during which the power supply to the stepping motor or the cooling unit is stopped, that is, the length of the continuous stop time before the automatic analysis apparatus 1 is started.

Therefore, the environmental temperature sensor 130 is installed on the inner wall of the housing 107, and in the present embodiment, particularly, the environmental temperature sensor 130 is installed on the inner wall of the post 108 serving as a frame forming the housing 107. The housing 107 includes a plurality of posts 108, and the environmental temperature sensor 130 is installed on the post 108 that is disposed closest to the photometer 110. The height direction position of the environmental temperature sensor 130 relative to the post 108 is desirably set to correspond to the height of the photometer 110. Further, the environmental temperature sensor 130 is disposed so as not to contact the photometer 110 and is separated from the photometer temperature sensor 120 installed in the spectroscopic chamber 113 of the photometer 110. Accordingly, each of the environmental temperature sensor 130 and the photometer temperature sensor 120 has a clearly distinguishable measurement purpose. Basically, an installation position of the environmental temperature sensor 130 is a position inside the housing 107, at which the temperature is changed depending on the environmental temperature (that is, a position significantly affected by the environmental temperature), and in addition to the inner wall of the post 108, the inner wall of the exterior cover 109 is also one example of the installation position. However, since the exterior cover 109 is a component that is opened, closed, or removed during maintenance of the automatic analysis apparatus 1, the post 108 serving as a fixed component is preferably used as a component for installation of the environmental temperature sensor 130 from the viewpoint of ease of wiring and the like.

The housing 107 including the post 108 has an outer wall exposed to the atmosphere outside the automatic analysis apparatus 1, so that the temperature of the housing 107 becomes close to the environmental temperature. Accordingly, although the environmental temperature sensor 130 is disposed inside the housing 107, a temperature equivalent to the environmental temperature is measured by the environmental temperature sensor 130 through the housing 107. Furthermore, since the environmental temperature sensor 130 is originally disposed inside the housing 107, the atmospheric temperature inside the housing 107 is also reflected in a measurement value of the environmental temperature sensor 130. Therefore, it becomes possible to perform temperature measurement based on both fluctuations in the environmental temperature and fluctuations in the temperature of the internal space of the housing 107.

### -Control Device-

Fig. 4 is a block diagram illustrating an outline of a temperature adjustment function of the photometer 110 by the control device 200. The control device 200 (for example, the control device 201) stores, as a first function, a correlation between the stable temperature of the photometer 110 and the environmental temperature in a memory, and calculates, based on the correlation therebetween, the stable temperature of the photometer 110 from the environmental temperature measured by the environmental temperature sensor 130 (a stable temperature calculation function 210). The control device 200 (for example, the control device 201) also controls, as a second function, the heater 140 only for a predetermined period of time (a heater control function 220) by using the stable temperature calculated based on the environmental temperature as a target value of the temperature of the photometer 110, which is measured by the photometer temperature sensor 120.

The above-mentioned control is performed when the automatic analysis apparatus 1 is started from the shut-down state (power OFF). As described above, the temperature measured by the environmental temperature sensor 130 is affected by both the temperature of the atmosphere inside the housing 107 and the environmental temperature. For example, when the automatic analysis apparatus 1 is left in the shut-down state for a long time, the temperature of the atmosphere inside the housing 107 of the automatic analysis apparatus 1 converges to the environmental temperature, and thus the temperature measured by the environmental temperature sensor 130 becomes approximately equal to the environmental temperature. On the other hand, when the automatic analysis apparatus 1 is in the operation state (power ON), the atmospheric temperature inside the housing 107 fluctuates due to the influence of exhaust heat from various devices and cold air from the cooling unit, and gradually rises over time from directly after the automatic analysis apparatus 1 is started with the temperature at the time of starting the automatic analysis apparatus 1 as a base temperature. Then, the atmospheric temperature inside the housing 107 becomes stable at a temperature higher than the environmental temperature, for example, several hours after the automatic analysis apparatus 1 is started. When the automatic analysis apparatus 1 has been shut down for a short period of time before being started such that the atmospheric temperature inside the housing 107 has not yet converged to the environmental temperature, the temperature measured by the environmental temperature sensor 130 for calculation of the stable temperature is measured higher than the environmental temperature.

When the automatic analysis apparatus 1 is started, the environmental temperature sensor 130 is operated to measure the environmental temperature, for example, only once. "Only once" means one opportunity and also means that the output of the environmental temperature sensor 130 is not used continuously or repeatedly thereafter for feedback control and the like. For example, "only once" is not intended to exclude the output of a plurality of measurement temperatures, the mean value or median thereof, and the like to the control device 200 at one opportunity. After receiving the input from the environmental temperature sensor 130, the control device 200 automatically calculates the stable temperature of the photometer 110 in accordance with the measurement temperature of the environmental temperature sensor 130. Thereafter, the photometer temperature sensor 120 starts temperature measurement, the temperature of the photometer 110 is measured at regular intervals, and the measurement temperature is input to the control device 200 at any time. The control device 200 compares the temperature of the photometer 110, which is input from the photometer temperature sensor 120, with the stable temperature calculated from the environmental temperature. Thereafter, the control device 200 operates the heater 140 to heat the photometer 110 when the temperature of the photometer temperature sensor 120 is less than the stable temperature, and stops the heater 140 when the temperature of the photometer temperature sensor 120 is equal to or higher than the stable temperature. The heater 140 is turned ON and OFF repeatedly for a predetermined period of time.

### -Timing Chart-

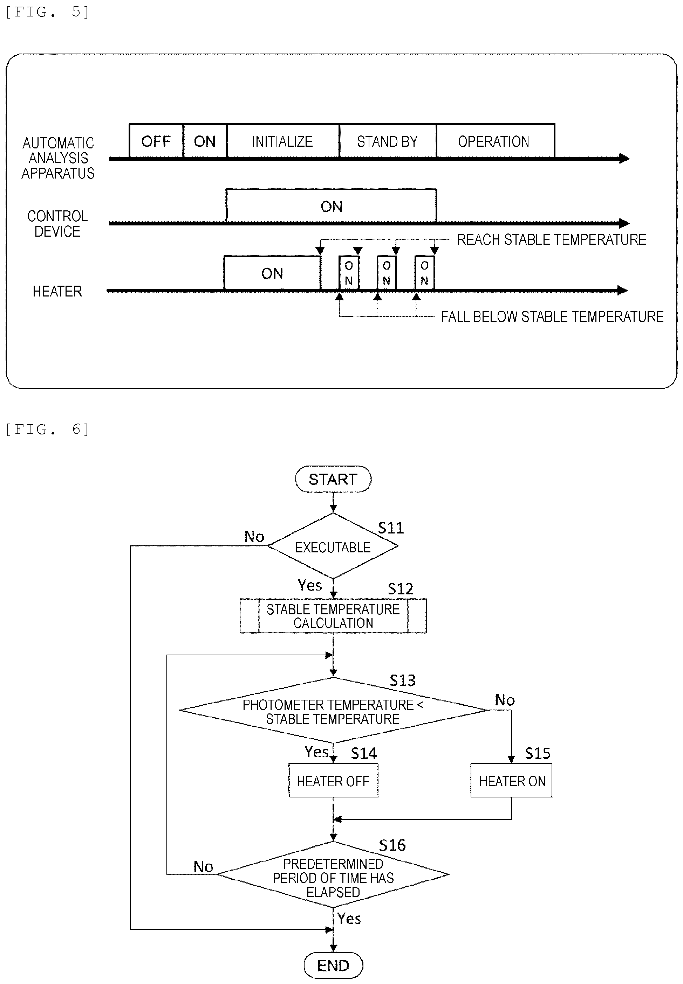

Fig. 5 is a timing chart related to the control of the temperature adjustment of the photometer 110 by the control device 200.

In the automatic analysis apparatus 1 of the present embodiment, states from the shut-down state to the operation state in which the analysis operation is repeatedly performed are broadly classified into five states including "OFF", "ON", "initialize", "standby", and "operation". "OFF" indicates a state in which power to the automatic analysis apparatus 1 is turned OFF. "ON" indicates a state in which power to the automatic analysis apparatus 1 is turned ON. "Initialize" indicates a state in which the control device 200 is started and confirms whether photometry can be performed by the photometer 110. "Standby" indicates a standby state until photometry is started. "Operation" indicates a state in which the analysis module 100 repeatedly performs the analysis operation of a specimen.

The predetermined period of time during which the control device 200 controls the heater 140 is a predetermined period of time and indicates a period of time before the analysis module 100 transitions to the operation state after the analysis module 100 is started. In other words, a period of time during which the temperature adjustment of the photometer 110 is performed is completed before the analysis module 100 transitions to the operation state, and is set so as not to overlap an operation period of time. The stable temperature calculation function 210 and the heater control function 220 described with reference to Fig. 4 are not performed during photometry by the photometer 110 or between the repeated photometry operations.

Further, a start period of time of the predetermined period of time is a period of time in which a point of time at which normality of the environmental temperature sensor 130 is confirmed after the control device 200 is started is regarded as a start period of time. In other words, after the state of the automatic analysis apparatus 1 transitions to the initialized state, the stable temperature of the photometer 110 is calculated and the control of the heater 140 is started when it is confirmed that the environmental temperature sensor 130 is operated normally. Although confirming the abnormal/normal state of the environmental temperature sensor 130 is performed according to a sequence, it is desirable to have a configuration in which the state of the environmental temperature sensor 130 is confirmed when the automatic analysis apparatus 1 transitions to the initialized state, and the control of the heater 140 is started when the automatic analysis apparatus 1 substantially transitions to the initialized state.

Furthermore, the above-mentioned predetermined period of time is a single period of time. In other words, the control device 200 drives, after the analysis module 100 is started, the heater 140 only once for a predetermined period of time before the analysis module 100 transitions to the operation state and does not drive the heater 140 in the operation state as described above.

In Fig. 5, the temperature adjustment function of the photometer 110 by the control device 200 is turned ON when the automatic analysis apparatus 1 transitions to the initialized state and is turned OFF when the automatic analysis apparatus 1 transitions to the operation state. That is, in a start sequence of the automatic analysis apparatus 1, a total period of time including the initialization and the standby is set as a predetermined period of time during which the temperature adjustment function of the photometer 110 is performed. However, the invention is not limited to this example, and a certain time (for example, 30 minutes, 1 hour, or the like) set shorter than the total period of time including the initialization and the standby may be set as a predetermined period of time, and the control of the heater 140 may be configured to be completed at a timing earlier than a timing at which the automatic analysis apparatus 1 transitions to the operation state.

As described above, the control device 200 performs control so as to turn ON or turn OFF the heater 140 for the predetermined period of time. Specifically, as illustrated in Fig. 5, when the temperature of the photometer 110, measured by the photometer temperature sensor 120, is lower than the stable temperature calculated based on the environmental temperature, the control device 200 turns ON the heater 140 to heat the photometer 110, and when the temperature measured by the photometer temperature sensor 120 is equal to or higher than the stable temperature, the control device 200 turns OFF the heater 140 to stop heating the photometer 110. Therefore, when the predetermined period of time begins, the heater 140 is continuously turned ON until the temperature measured by the photometer temperature sensor 120 reaches the stable temperature, and then the heater 140 is turned OFF when the temperature measured by the photometer temperature sensor 120 reaches the stable temperature. When the heater 140 is operated, heat is applied to the photometer temperature sensor 120 and the surroundings thereof. The heat applied from the heater 140 causes the temperature of the photometer temperature sensor 120 to rise, and when the temperature of the photometer 110 becomes higher than the stable temperature, the heater 140 is turned OFF. However, while the heater 140 is turned OFF such that the temperature around the photometer 110 is lower than the stable temperature of the photometer 110, the heat applied to the photometer 110 is dissipated to the surroundings and is also transferred to metal components supporting the photometer 110. As a result, the temperature of the photometer temperature sensor 120 falls, and when the temperature becomes less than the stable temperature, the heater 140 is turned ON again.

While the temperature adjustment function of the control device 200 is turned ON, the heater 140 is turned ON whenever the temperature of the photometer temperature sensor 120 becomes less than the stable temperature and is turned OFF whenever the temperature becomes equal to or higher than the stable temperature. Therefore, as illustrated in Fig. 5, it is assumed that the heater 140 is repeatedly turned ON and OFF. During this period, as the temperature of the photometer 110 rises, the ambient temperature of the photometer 110 also rises due to the heat dissipated from the photometer 110 and the heat generated from other devices, and thus the temperature of the photometer 110 is less likely to fall. Accordingly, as the time approaches the end of the predetermined period of time, the temperature of the photometer 110 converges to the stable temperature, and the operation interval of the heater 140 may become longer.

Note that, under the control, the heater 140 is turned OFF when the measurement temperature of the photometer temperature sensor 120 reaches the stable temperature. However, in fact, a delayed response to a temperature change occurs due to a large thermal capacity of the photometer 110 and heat transfer to the metal components supporting the photometer 110. As a result, the temperature of the photometer 110 rises slightly even though the heater 140 is stopped and then begins to fall from a temperature slightly higher than the stable temperature.

### -Flowchart-

Fig. 6 is a flowchart illustrating a temperature adjustment procedure of the photometer 110 by the control device 200. When the control device 200 is started after the automatic analysis apparatus 1 is started, the flow in Fig. 6 is started.

### Step S11

When the flow in Fig. 5 is started, the control device 200 first determines whether temperature adjustment of the photometer 110 can be performed. Here, it is confirmed whether a hardware related to the temperature adjustment function of the photometer 110 is in a state in which the temperature adjustment can be performed by the hardware. For example, as a confirmation item, it is confirmed whether the temperature measured by the photometer temperature sensor 120 can be obtained normally (whether the input from the photometer temperature sensor 120 can be recognized) or whether the temperature measured by the photometer temperature sensor 120 is within a specified normal temperature range. When the input from the photometer temperature sensor 120 is not recognized by the hardware, or when the measurement temperature input from the photometer temperature sensor 120 is out of the normal temperature range, the flow in Fig. 6 cannot be performed, and the control device 200 ends the flow in Fig. 6 without controlling the heater 140. In this case, the photometer 110 naturally converges to a stable temperature without being actively heated by the heater 140.

### Step S12

When the normal state of the photometer temperature sensor 120 is confirmed in step S11, the control device 200 inputs the measurement temperature of the environmental temperature sensor 130 and calculates the stable temperature of the photometer 110 based on the input measurement temperature (the stable temperature calculation function 210).

### Steps S13 to S16

After calculating the stable temperature of the photometer 110, the control device 200 controls the heater 140 for a predetermined period of time based on the stable temperature (the heater control function 220). Specifically, the control device 200 first inputs the current temperature of the photometer 110, which is measured by the photometer temperature sensor 120, and compares the input current temperature with the stable temperature calculated in step S12 so as to determine whether the temperature of the photometer 110 is less than the stable temperature (step S13). When the temperature of the photometer 110 is less than the stable temperature, the control device 200 turns ON the heater 140 to heat the photometer 110 (step S14), and when the temperature of the photometer 110 is equal to or higher than the stable temperature, the control device 200 turns OFF the heater 140 to stop heating the photometer 110 (step S15). During this period, the control device 200 determines whether the end of the predetermined period of time has arrived, that is, whether the time to transition to the operation state has arrived, or determines whether a certain amount of time has elapsed since the flow in Fig. 6 was started (step S16). The control device 200 periodically repeats the processing in steps S13 to S16 only for a predetermined period of time and ends the flow in Fig. 6 when the predetermined period of time has elapsed.

### -Stable Temperature-

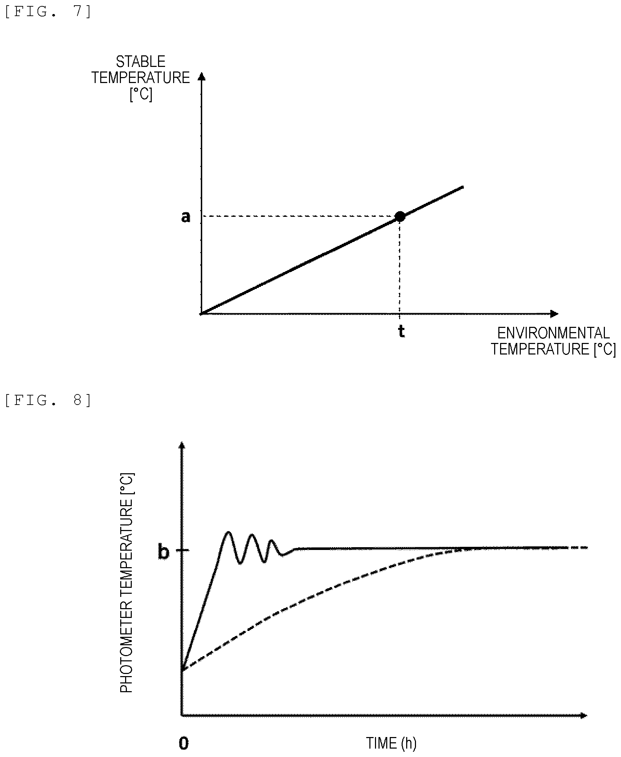

Fig. 7 is a diagram illustrating an example of a correlation between the stable temperature and the environmental temperature used for temperature adjustment control of the photometer 110 of the automatic analysis apparatus 1 of the present embodiment.

As described above, the control device 200 uses the correlation between the environmental temperature and the stable temperature to calculate the stable temperature based on the environmental temperature. A graph illustrated in Fig. 7 shows an example of the correlation between the environmental temperature and the stable temperature, which is used by the control device 200 to calculate the stable temperature. Here, a horizontal axis indicates the environmental temperature measured by the environmental temperature sensor 130, and a vertical axis indicates the stable temperature. The correlation between the stable temperature and the environmental temperature is assumed to be a relationship in which the stable temperature rises monotonically as the environmental temperature rises. Although Fig. 7 illustrates an example in which the correlation between the environmental temperature and the stable temperature is set as a linear proportional relationship, a curved relationship line can also be set.

In the processing of step S12 in Fig. 6, the control device 200 can calculate the stable temperature by applying the measurement temperature of the environmental temperature sensor 130 to a relational equation that has been predefined as defining the relationship in Fig. 7. For example, as illustrated in Fig. 7, when the environmental temperature is t°C, the stable temperature of the photometer 110 is determined to be a°C from the relational equation. When there are a plurality of analysis modules 100, this relational equation may be common to all the analysis modules 100 or may be prepared individually for each of the analysis modules 100. In a case where the relational equation is prepared individually for each of the analysis modules 100, for example, during the adjustment stage before shipment, the environmental temperature is changed such that the analysis module 100 is started and stopped a plurality of times. Thereafter, the output of the photometer temperature sensor 120 can be monitored to measure the stable temperature of the photometer 110, and then the stable temperature can be calculated from the actual measurement data.

### -Effects-

(1) According to the present embodiment, the stable temperature of the photometer 110 is calculated from the environmental temperature measured by the environmental temperature sensor 130 based on the correlation between the stable temperature of the photometer 110 and the environmental temperature, and then the heater 140 is controlled only for a predetermined period of time using the calculated stable temperature as a target value of the photometer temperature, measured by the photometer temperature sensor 120.

Fig. 8 is a diagram illustrating the effect of the temperature adjustment function of the photometer 110 in the present embodiment. In Fig. 8, a horizontal axis indicates time [h], and a vertical axis indicates the temperature [°C] of the photometer 110. A solid line in the graph represents a temperature change of the photometer 110 when the heater 140 is controlled after the automatic analysis apparatus 1 is started from a shut-down state, that is, when the present embodiment is applied. A dashed line in the graph represents a temperature change of the photometer 110 when heating by the heater 140 is not performed under the same conditions, that is, when the present embodiment is not applied.

Time 0 is time when the automatic analysis apparatus 1 transitions to the initialized state. When the present embodiment is not applied, as indicated by the dashed line, the temperature of the photometer 110 gradually rises over time, and eventually (after, for example, about three hours) becomes stable at b°C, which is the stable temperature of the photometer 110 under the conditions.

On the other hand, in the case of the present embodiment, the stable temperature b°C is calculated based on the output of the environmental temperature sensor 130, and the heater 140 is continuously operated until the target temperature is reached. As a result, the solid line in the graph shows that the temperature of the photometer 110 rises with a large inclination immediately after time 0, and the temperature of the photometer 110 quickly reaches b°C. Thereafter, the heater 140 is repeatedly turned ON and OFF, and the measurement temperature of the photometer temperature sensor 120 fluctuates in an oscillatory manner. However, a temperature fluctuation width becomes smaller over time, and the temperature of the photometer 110 converges to the stable temperature b°C at an earlier stage (for example, about one hour) than the dashed line.

As described above, according to the present embodiment, the temperature of the photometer 110 can be automatically controlled to the stable temperature in accordance with the fluctuating environmental temperature.

Furthermore, the temperature of the photometer 110 is controlled to reach the stable temperature in accordance with the environmental temperature, that is, a temperature that naturally converges with the lapse of the operation time of the automatic analysis apparatus 1. Accordingly, temperature fluctuations of the photometer 110 are suppressed without operating the heater 140 thereafter. Therefore, there is no need to use the heater 140 to maintain the temperature of the photometer 110, and temperature fluctuations during photometry are suppressed, thereby making it possible to ensure photometry accuracy and to suppress energy consumption.

(2) Furthermore, the environmental temperature sensor 130 is installed inside the housing 107 of the analysis module 100 at a position where the temperature changes depending on the environmental temperature. Specifically, the environmental temperature sensor 130 is installed on the inner wall of the housing 107. As a result, the environmental temperature sensor 130 measures the environmental temperature via the housing 107, and the measurement temperature also reflects the influence of the temperature of the atmosphere inside the housing 107. Therefore, the invention can respond not only to the influence of the environmental temperature, but also to fluctuations in the stable temperature due to the length of the shut-down time of the analysis module.

For example, when the environmental temperature is measured, the environmental temperature sensor 130 can be installed on the outer wall of the housing 107 for direct measurement of the environmental temperature. However, in this case, a temperature measured by the environmental temperature sensor 130 approximately coincides with the environmental temperature regardless of the atmospheric temperature inside the housing 107, and it is difficult to consider the atmospheric temperature inside the housing 107 from the temperature measured by the environmental temperature sensor 130. For example, when the analysis module 100 is started after a short period of shut-down time, the atmospheric temperature inside the housing 107 is not lowered to the environmental temperature, and the base temperature of the photometer 110 is not lowered, so the stable temperature should be calculated to be higher. However, in this case, the above-mentioned states of the atmospheric temperature and the base temperature are not considered, and the stable temperature is estimated to be lower than an appropriate value. For this reason, when a user wants to calculate an appropriate stable temperature, it is necessary to install, separately from the environmental temperature sensor 130, a temperature sensor that measures the internal temperature of the housing 107 and to perform processing of correcting the stable temperature using the measurement value. However, as described above, since the behavior of the temperature inside the housing 107 after the automatic analysis apparatus 1 transitions to the operation state is complicated and difficult to predict, it is not easy to construct a correction algorithm for the stable temperature.

On the other hand, in the present embodiment, the environmental temperature is measured under the influence of the temperature inside the housing 107 such that the temperature inside the housing 107 is reflected in the measured environmental temperature. As a result, the stable temperature in accordance with both the environmental temperature and the period of shut-down time can be calculated very easily without requiring complicated correction processing.

In addition, when the environmental temperature sensor 130 is installed on the outer wall of the housing 107, the environmental temperature sensor 130 protruding from the outer wall surface of the automatic analysis apparatus 1 functions as an antenna and receives radio waves, which may affect the photometry results. On the other hand, in the present embodiment, since the environmental temperature sensor 130 does not protrude from the outer wall surface of the housing 107, there is no concern about the above-described problem.

(3) When the environmental temperature sensor 130 is installed on the inner wall of the housing 107 to measure the environmental temperature that reflects the internal temperature of the housing 107, it is also possible to consider, for example, a structural configuration in which the environmental temperature sensor 130 is installed on the inner wall of the exterior cover 109. However, since the exterior cover 109 is opened, closed, or removed during maintenance of the analysis module 100, it is advantageous to install, in consideration of wiring and other factors, the environmental temperature sensor 130 on a main body frame part of the housing 107, which is a fixed part, as in the present embodiment, for example, on the inner wall of the post 108, and thus it is possible to reduce impact on maintenance work.

(4) As described above, temperature adjustment of the photometer 110 by control of the heater 140 is completed before the automatic analysis apparatus 1 transitions to the operation state. Accordingly, it is possible to prevent the spectroscopic element 111 and the light-receiving element 112 of the photometer 110 from being heated by the heater 140 during photometry, and to suppress the effect of heating by the heater 140 on the photometry results. For example, when the temperature of the light-receiving element 112 rises, sensitivity may increase only at a specific wavelength. Furthermore, the spectroscopic element 111 needs to be precisely positioned to secure spectroscopic accuracy. In this case, when a component supporting the spectroscopic element 111 expands under the influence of heating by the heater 140, the position of the spectroscopic element 111 may be shifted. According to the present embodiment, the temperature adjustment of the photometer 110 under the control of the heater 140 is completed before the automatic analysis apparatus 1 transitions to the operation state, and the heater 140 is not operated in the operation state, thereby suppressing the adverse effect on photometry accuracy.

(5) In addition, in the present embodiment, temperature adjustment of the photometer 110 by controlling the heater 140 is started when normality of the environmental temperature sensor 130 is confirmed after the control device 200 is started. In this way, since temperature control is started as soon as the normality of the environmental temperature sensor 130 is confirmed, the temperature of the photometer 110 can reach the stable temperature as quickly as possible, and it is possible to improve certainty of maintaining the temperature of the photometer 110 at the stable temperature within a predetermined period of time.

(6) In the present embodiment, after the analysis module 100 is started, the temperature control of the photometer 110 using the heater 140 (flow in Fig. 6) is performed only once before the analysis module 100 transitions to the operation state. The above-described control can be simplified by limiting the opportunity of controlling the heater 140 to a period of time before operation during which the behavior of internal temperature of the housing 107 becomes complicated. Further, as described above, a stable temperature of the photometer 110, which eventually converges without heating by the heater 140, is estimated according to the environmental temperature and the internal temperature of the housing 107 at that time, and the photometer 110 is heated to the stable temperature. Accordingly, the temperature of the photometer 110 can be stabilized without controlling the heater 140 after the analysis module 100 transitions to the operation state, and an opportunity for temperature adjustment of the photometer 110 using the heater 140 is required only once before the analysis module 100 transitions to the operation state. Additionally, since the heater 140 is not operated when the analysis module 100 is in the operation state, energy consumption can be suppressed as described above.

(7) Further, the heater 140 is also controlled to be turned ON and OFF. As described above, the atmospheric temperature inside the housing 107 is a mixture of cold air and exhaust heat and is also affected by the environmental temperature such that it is difficult to predict the behavior of the temperature inside the housing 107. Therefore, it is difficult to set parameters when the heater 140 performs variable output control. In this respect, an algorithm for ON/OFF control is simple, and the temperature of the photometer 110 can stably converge to a target temperature. In addition, after the analysis module 100 is started, the heater 140 is continuously operated until the temperature of the photometer 110 reaches the target stable temperature, so that the temperature of the photometer 110 quickly reaches the stable temperature.

However, in order to obtain the essential effect (1) described above, instead of ON/OFF control, the heater 140 can be configured to perform, for example, variable output control based on a difference between the measurement temperature of the photometer temperature sensor 120 and the stable temperature.

(8) Both the photometer temperature sensor 120 and the heater 140 are configured to be provided in the spectroscopic chamber 113 of the photometer 110, the overall temperature of the photometer 110 is configured to be measured, and the entire photometer 110 is configured to be heated. As described above, thermal fluctuations can affect sensitivity of the light-receiving element 11 as well as accuracy of an optical path of the spectroscopic element 111 or the like in a complex manner. Therefore, instead of measuring and adjusting the temperature of a specific element, it is preferable to grasp and adjust the overall temperature of the photometer 110. The present embodiment can respond to this point.

### -Modifications-

The invention is not limited to the above-described embodiments and may include various modifications. For example, the embodiments have been described in detail to describe the invention in an easy-to-understand manner and are not necessarily limited to those including all the configurations described above. A part of the configuration can be replaced with another configuration. It is also possible to delete a part of the configurations of the embodiments or add another configuration to a part of the configurations of the embodiments.

For example, a description has been given as to an example in which the flow in Fig. 6 is applied when the analysis module 100 is started. However, when there is specific maintenance that needs to be performed in a state in which the temperature of the photometer 110 is stable, the flow in Fig. 6 can also be applied during such maintenance.

### Reference Signs List

1: automatic analysis apparatus
100: analysis module
101: light source
107: housing
108: post (frame)
110: photometer
111: spectroscopic element
112: light-receiving element
113: spectroscopic chamber
120: photometer temperature sensor
130: environmental temperature sensor
140: heater
200: control device

## Claims

1. An automatic analysis apparatus comprising:
an analysis module configured to perform an analysis operation of a specimen; and
a control device configured to control the analysis module, wherein
the analysis module includes:
a light source configured to emit light;
a photometer configured to measure the light from the light source, the light having passed through a reaction solution obtained by mixing the specimen with a reagent;
a photometer temperature sensor configured to measure temperature of the photometer;
an environmental temperature sensor installed in a housing of the analysis module, the environmental temperature sensor being configured to measure an environmental temperature outside the housing; and
a heater configured to heat the photometer, and
the control device is configured to:
calculate, based on a correlation between a stable temperature of the photometer and the environmental temperature, the stable temperature of the photometer from the environmental temperature measured by the environmental temperature sensor, and
control the heater only for a predetermined period of time using the stable temperature as a target value of the photometer temperature measured by the photometer temperature sensor.

2. The automatic analysis apparatus according to claim 1, wherein the environmental temperature sensor is installed on an inner wall of the housing.

3. The automatic analysis apparatus according to claim 1, wherein the environmental temperature sensor is installed on a frame forming the housing.

4. The automatic analysis apparatus according to claim 1, wherein the environmental temperature sensor is installed at a position where the temperature changes depending on the environmental temperature.

5. The automatic analysis apparatus according to claim 2, wherein the photometer temperature sensor is installed in a spectroscopic chamber of the photometer and is separated from the environmental temperature sensor.

6. The automatic analysis apparatus according to claim 1, wherein the predetermined period of time is a period of time from when the analysis module is started to until when the analysis module transitions to an operation state in which the analysis operation of the specimen is repeatedly performed.

7. The automatic analysis apparatus according to claim 6, wherein the predetermined period of time is a period of time having, as a start period of time, a point of time at which normality of the environmental temperature sensor is confirmed after the control device is started.

8. The automatic analysis apparatus according to claim 6, wherein
the predetermined period of time is a single period of time, and
the control device drives, after the analysis module is started, the heater only once for the predetermined period of time before the analysis module transitions to the operation state.

9. The automatic analysis apparatus according to claim 1, wherein the control device performs control to turn ON and OFF the heater.

10. The automatic analysis apparatus according to claim 9, wherein the control device is configured to:
turn ON the heater when the temperature measured by the photometer temperature sensor is less than the stable temperature, and
turn OFF the heater when the temperature measured by the photometer temperature sensor is equal to or greater than the stable temperature.

11. The automatic analysis apparatus according to claim 1, wherein the correlation between the stable temperature and the environmental temperature is a relationship in which the stable temperature increases monotonically with an increase in the environmental temperature.

12. The automatic analysis apparatus according to claim 1, wherein
the photometer includes a spectroscopic element, a light-receiving element, and a spectroscopic chamber surrounding the spectroscopic element and the light-receiving element, and
the photometer temperature sensor is installed in the spectroscopic chamber.

13. The automatic analysis apparatus according to claim 1, wherein
the photometer includes a spectroscopic element, a light-receiving element, and a spectroscopic chamber surrounding the spectroscopic element and the light-receiving element, and
the heater is installed in the spectroscopic chamber to heat the spectroscopic chamber.

14. A method of adjusting temperature of a photometer provided in an automatic analysis apparatus including an analysis module configured to perform an analysis operation of a specimen, and a control device configured to control the analysis module, the method comprising:
installing a heater configured to heat the photometer;
measuring, inside a housing of the analysis module, an environmental temperature outside the housing;
calculating, based on a correlation between a stable temperature of the photometer and the environmental temperature, the stable temperature of the photometer from the environmental temperature; and
controlling, using the stable temperature as a target value, the heater only for a predetermined period of time to adjust the temperature of the photometer.
